# EUROPEAN PATENT APPLICATION

(11) **EP 2 418 600 A1**
(43) Date of publication of application: **15.02.2012**
(21) Application number: 10305881.4
(22) Date of filing: 11.08.2010
(51) Int. Cl.: G06F 21/00

(54) **Malware protection scheme**

(71) Applicant: Thomson Licensing, 92130 Issy-les-Moulineaux (FR)
(72) Inventor: Borsum, Malte, 30655, Hannover (DE)
(74) Representative: Schmidt-Uhlig, Thomas

(57) **Abstract**

The present invention relates to a method for protecting computer systems and multimedia playback devices from malware. In order to detect malware in a media file (21, 21') one or more parameter values are retrieved (22) from the media file (21, 21') The retrieved parameter values are then compared (23) with valid parameter values to detect invalid parameter values. If more than a specified number of invalid parameter values are detected access to the media file (21, 21') is blocked (4). In addition, apart from the validity an unlikelihood of the retrieved parameter values is considered.

## Description

The present invention relates to a method for protecting computer systems and multimedia playback devices from malware.

Today's computer systems suffer a high risk of malware infection. The amount of new viruses, worms and security issues increases every year. State of the art malware scanners, e.g. anti-virus software, typically use a specific signature for each single malware, or at best one signature for a specific class of malware. They have to regularly update their recognition patterns to be able to address the newest security issues. In the past the updating of the signatures needed to be performed every couple of days or even weeks, but today the update interval has been reduced to only hours. It is predictable that in the near future the update interval will need to be further reduced, so that updates may have to be performed on a minute by minute basis. This leads to the problem that it becomes more and more difficult to have the new signatures available on all computers before they are confronted with the malware.

Some anti-virus software includes heuristic scan engines to detect new malware, where no specific signature is available yet. Heuristics scan engines try to detect possibly dangerous or somehow "wrong" behavior of software. Apparently, it is not always possible to determine "good" and "bad" behavior of software. In addition, the available software pool for current computer systems is so huge that it is not possible to prevent false alarms.

Unfortunately, false alarms are also often caused by the frequent updates, as it is nearly impossible to test the new signatures for all the software that might be installed on the worldwide computer base. Such false alarms may cause serious computer problems when the incorrectly detected files are deleted or quarantined by the anti-virus software or by an unsettled user. This may bring the computer into an unusable state.

Accordingly, it is an object of the present invention to propose an alternative solution for protecting computer systems and multimedia playback devices from malware.

According to a first aspect of the invention, this object is achieved by a method for detecting malware in a media file, which has the steps of:
- retrieving one or more parameter values from the media file;
- comparing the retrieved one or more parameter values with valid parameter values to detect invalid parameter values; and
- blocking access to the media file if more than a specified number of invalid parameter values are detected.

Advantageously, the method further has the steps of:
- determining an unlikelihood of the retrieved one or more parameter values;
- comparing the determined unlikelihood with a threshold; and
- blocking access to the media file if the determined unlikelihood is above the threshold.

According to a further aspect of the invention, this object is also achieved by a method for detecting malware in a media file, which has the steps of:
- retrieving one or more parameter values from the media file;
- determining an unlikelihood of the retrieved one or more parameter values;
- comparing the determined unlikelihood with a threshold; and
- blocking access to the media file if the determined unlikelihood is above the threshold.

The invention proposes not to simply scan for well-known harmful parts of the media files like conventional antivirus software. Instead, the media files are deeply analyzed with regard to their parameter values. Access is only granted to those media files that match some well defined criteria. This approach has the advantage that the frequency of updates is greatly reduced. At the same time the security is increased, because new and unforeseen attacks are more reliably detected.

The analysis of the media files is preferably performed in two stages. In a first stage some or all parameters inside the media file are checked if they are in a valid range defined by the standardized media file syntax. In this stage also the size of the file and the relation between the parameters is advantageously checked. For example, a small image file with an extremely huge width and height is unlikely, and thus suspicious. Favorably, the unlikelihood of the retrieved one or more parameter values is determined using one or more likelihood tables, which indicate the likelihood of the parameter values for one or more of the parameters over the complete allowed value range. In this way the unlikelihood of a certain parameter value can easily be determined without extensive processing.

The second stage checks if the parameters are in a usual range in relation to the context in which the file is encountered. For example, if the media file is an image loaded together with a webpage only a small resolution and a small file size should be expected. In contrast, a media library in a local network will contain larger files with higher resolution. To implement this feature profiles are favorably provided, e.g. as different likelihood tables for different contexts, to define which parameter values are considered as "normal", "unexpected" or in-between. These profiles contain different valid ranges depending on the context of the media file.

Preferably, an accumulated unlikelihood is determined for the one or more parameter values. Instead of comparing the unlikelihood of each parameter value with a corresponding threshold, the unlikelihood of subsequent parameter values is added up. The total or an intermediate total of the unlikelihood is then compared with a threshold. This has the advantage that a single suspicious value does not automatically lead to a blocking of the media file. Only if the parameter values of the media file as a whole are overly unlikely, the media file is blocked. This approach thus limits the number of mistakenly blocked media files.

Advantageously, a further threshold below the threshold for blocking access is defined. In case the unlikelihood is still below the blocking threshold, but already above the further threshold, a notification is generated. The notification is preferably generated in the form of a log file, an e-mail or a small icon or balloon tip. This notification contains information about the corresponding media file and the unusual or suspicious parameters. The user or an administrator then has the possibility to analyze the media file in more detail at a later time and decide whether the media file shall be deleted, quarantined until further information is available, checked again using a heuristic approach, or handled as an exception. Alternatively, the media file is automatically quarantined and needs to be explicitly approved by the user or administrator.

If the media file was in fact infected, then the computer system or multimedia playback device is also infected. However, the user or administrator is at least informed and may protect other users.

Advantageously, the one or more likelihood tables are generated by analyzing parameter values of media files that are known to contain no malware. To obtain better matching profiles a "learning-run" over existing malware-free media files is performed. For example, the user specifies a local path or a local-network path to his photo-library. The malware protection system then generates a profile matching the characteristics of the images that the user is using. This procedure will be repeated for the video-library and other locations, where new files and downloads are typically stored. In this way the user obtains specific profiles for each of his storage locations. Of course, the likelihood tables can likewise be generated by a provider of a malware protection solution. In this case the likelihood tables are made available to a malware protection engine at the user side, e.g. via electronic distribution or physical media.

The proposed malware detection scheme is especially useful for standardized media files. Advantageously a dedicated protocol or standard checker is provided for each supported media file. Updates of the dedicated protocol or standard checkers are only necessary if that specific format changes, i.e. when a new version of that media file format is published. All recent vulnerabilities caused by media files were enabled by misused parameters, which lead to memory, heap or stack over- or underflow. This over- or underflow in turn allows to load and execute the malware code making use of security bugs in one or more of the applications running on the targeted computer. For example, image sizes are set to unusual high values or the lengths of some parameters exceed typical or even standardized buffers.

Preferably, before deeply analyzing the media file a file type of the media file is determined using at least two different file type determining methods. Access to the media file is then blocked if a mismatch exists in the determined file types. This means that in a first stage it is checked if the media file contains exactly that kind of data that is indicated by the MIME type and the file extension, for example. Often current media players have some intelligent file detection routines in order to be able to access also media files that come with a wrong type description. Unfortunately this feature is also misused by malware to smuggle bad code into a vulnerable part of an application. By blocking incorrectly labeled files, a first part of insecure media files is locked out.

The malware detection scheme according to the present invention is advantageously implemented in different locations in a computer environment. For example, for direct filtering of typical web surfing the malware detection scheme is implemented at the web proxy. Here all suspicious images, videos and sound are filtered and replaced by a warning message by a central instance. Favorably also embedded active content such as scripts are suppressed at this central instance. Implementation of the malware detection scheme at the web proxy allows an easy setup and maintenance of profiles by a central IT department.

Preferably a central instance is also used for shared media libraries. The central instance scans the complete library or only the new and modified media files on a regular basis. Ideally it is integrated in the file server, so that new media files are scanned immediately when they are stored for the first time. This also allows an easy setup and maintenance of profiles by a central IT department.

If the files are stored locally on several computers and are not accessible over the network, local instances of the malware detection scheme are advantageously used, similar to current personal antivirus solutions.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: depicts a method for malware protection according to the invention;
- Fig. 2: shows an exemplary header of a BMP file;
- Fig. 3: depicts an exemplary DIP header of a BMP file;
- Fig. 4: illustrates a parsing method for the DIP header of Fig. 3 performed in the second stage of Fig. 1,
- Fig. 5: shows a parsing method for the DIP header of Fig. 3 performed in the third stage of Fig. 1,
- Fig. 6: schematically depicts an apparatus for playback of media files implementing a malware protection scheme according to the invention.

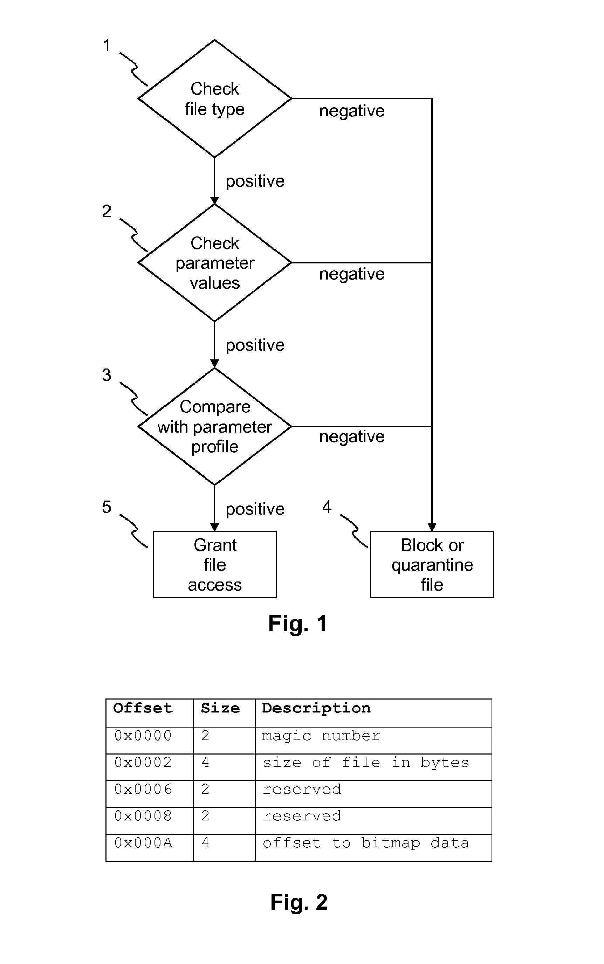

Fig. 1 depicts a method for malware protection according to the invention. In a first stage 1 it is checked if the file to be accessed contains exactly that type of data that is stated by its MIME type and the file extension. If the check is positive, a second stage 2 is initiated. If the check is negative, the file is blocked or quarantined 4. Current media players often have some intelligent file detection routines, which allow to correctly handle also files that come with a wrong type description. However, this feature is sometimes used by malware to smuggle bad code to a vulnerable part of an application. By preventing access to incorrectly labeled files, a first fraction of possibly harmful media files is blocked.

In a second stage 2 some or all parameters inside the media file are checked to determine whether the parameters are in a valid range as defined by the standardized media file syntax. If the check is positive, a third stage 3 is initiated. If the check is negative, the file is blocked or quarantined 4.

Finally, in a third stage 3 it is checked if the parameters are in a usual range in relation to the context in which access to the file takes place. For example, an image file accessed in the context of a web page should only have a small resolution and a small file size. To implement this feature profiles are provided, which define which parameters are considered as 'normal', 'unexpected' or 'in-between'. These profiles contain different valid parameter ranges, depending on the context of the file access. For example, a media library in a local network will generally contain larger files with higher resolution than files that are directly downloaded from the internet. In this stage preferably also the size of the file and the relation between the parameters is checked. For example, a small image file with an extremely huge width and height is suspicious. Only if a file passes all three stages 1, 2, 3 access to the file is granted 5.

In order to improve the profiles advantageously a training-run is made over existing files, which are known to contain no malware. For example, the user specifies a local or local-network path to his image library. The files in this image library are analyzed to generate a profile that matches the characteristics of the stored images. This is repeated for the video library, download folders, etc. In this way specific profiles are obtained for the different locations.

In the following an example shall be given to demonstrate some features that are possible with the malware protection scheme according to the invention. For the sake of simplicity the example is based on the common and simple file format BMP (bitmap), assuming a valid file that should pass the filter. For other file formats, e.g. audio and video file formats, similar features can easily be implemented.

In the first stage 1 the BMP file is presented to the malware filter, e.g. because the file is accessed by a user, or stored on a media server for the first time, etc, depending on the usage scenario of the filter. As indicated before, the object of the first stage 1 is to detect problems with the file type. For this purpose two or more independent methods are used to determine the file type, e.g. based on the file extension or the MIME type. More advanced methods make use of file header parsers or even complex heuristics, which perform content based file type detection. The reliability of the first stage 1 increases with the number of methods that are used to determine the file type. However, the demand for processing performance will also increase. Advantageously the file will only pass the first stage if all or at least a specified number of methods yield the same file type. Otherwise the file is blocked or quarantined because of a possible file type disguise attack.

If the file reaches the second stage 2 the file type is already confirmed. In the present example the file is a BMP file.

Therefore, a special BMP module is started to parse the BMP file for standard compliancy. A BMP file consists of four consecutive parts, namely a BMP file header, DIP bitmap information, a color palette and bitmap data. These parts are parsed one after the other, and also parameter after parameter. During the parsing the available information about the file increases.

Fig. 2 shows an exemplary header of a BMP file. The magic number usually contains the ASCII code for 'BM', i.e. 0x42 0x4D. However, also 'BA', 'CI', 'CP', 'IC'", and 'PT' are sometimes encountered and may be accepted, depending on the implementation of the parser. In case of any other value the file is blocked or quarantined 4. The same is true in case the file size indicated in the header does not match the file size reported by the operating system. With regard to the indicated offset it is checked whether the offset points to a location inside the file. If this is not the case, the file is blocked or quarantined. In the present simple example the reserved fields are ignored.

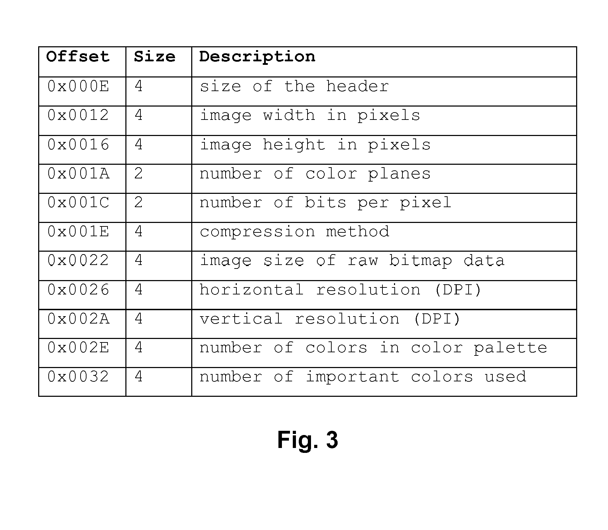

An exemplary DIP header of a BMP file is depicted in Fig. 3. The DIP header, i.e. the bitmap information, can have different sizes depending on the version of the BMP file format that is used. The example of Fig. 3 is based on the Windows Version 3. In the following the constraints of the entries in the DIP header are summarized. Depending on the version of the BMP file format the size of the header is 12, 64, 40, 108 or 124 bytes. The image width and height are defined as signed integers. Negative values would result in incorrect dimensions. In addition, as a zero for one direction is also not useful, only the range [1...2³¹-1] is allowed. The number of color planes must be set to '1'. For the number of bits per pixel, which specifies the color depth, only certain distinct values are useful. Therefore, the allowed range is preferably limited to [1...32]. An even stricter parser only allows the typical values 1, 4, 8, 16, 24, and 32. For the compression method only the values [0...5] are defined. The image size of the raw bitmap data can also be calculated from the image size and the compression method. The indicated value has to match the calculated value. The horizontal and vertical resolutions of the image only provide additional descriptive information. As such they need not be evaluated. However, as they are defined as signed integers, negative values are forbidden. Also, the value zero is not useful. Therefore, only the range [1...2³¹-1] is allowed. The number of colors in the palette must be smaller then the theoretical limit 2ⁿ calculated from the color depth, i.e. the value n indicated for the number of bits per pixel. For the BI_RGB compression method no color palette is used. Finally, the number of important values in the color palette must be smaller than or equal to the number of entries in the color palette.

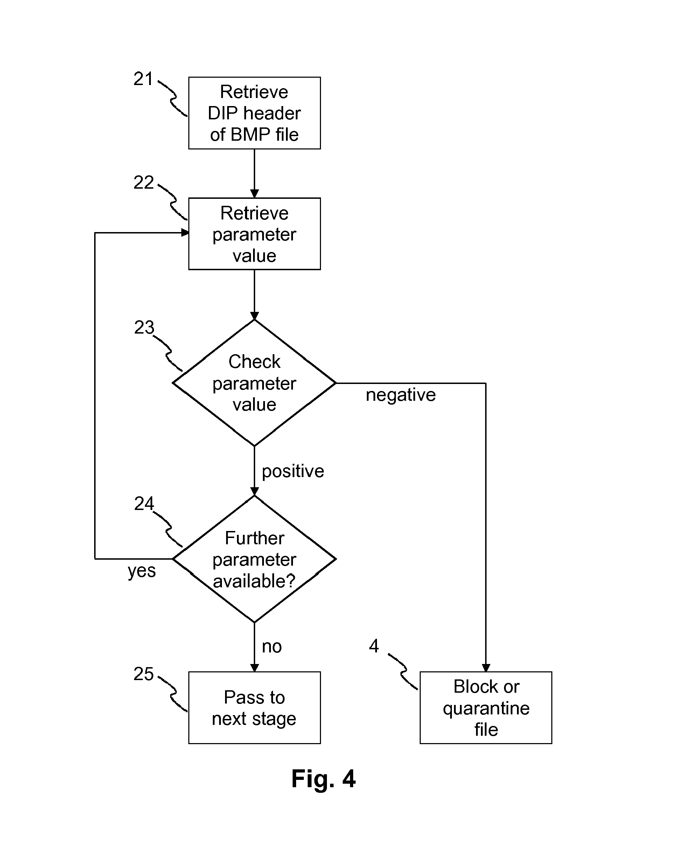

A parsing method for parsing through the DIP header is illustrated in Fig. 4. After retrieving 21 the DIP header a first parameter value of the DIP header is selected 22. Subsequently the parameter value is checked 23. If the value is outside the specified range or different from the allowed value, or in case of any mismatch, the file is blocked or quarantined 4. If the checking step 23 yields that the parameter value is valid, it is determined 24 whether a further parameter is available for evaluation. If this is the case, the method retrieves 22 the next parameter value. Parsing is continued until either an invalid value is found or the checking step 24 yields that no further parameter is available. In the latter case the method passes 25 to the next stage.

In the above example, the file is blocked or quarantined 4 if a single invalid parameter value is found. Of course, it is also possible to block or quarantine the file only if more than a specified number of mismatches or incorrect values are found.

For the next two blocks, i.e. the color palette and the bitmap data, all possible bit values also generate valid color entries or pixel values. Therefore, there is nothing that could be filtered or checked for conformance. However, it is advantageously checked whether the combined size of all four parts of the BMP file exceeds the actual file size. In this case the file is blocked or quarantined.

In contrast to BMP files, which do not support real compression, for compressed files the compressed stream itself is preferably analyzed to be save for decoding. During this analysis it is checked whether any buffer overflows or invalid states or values are generated during standard conform decoding.

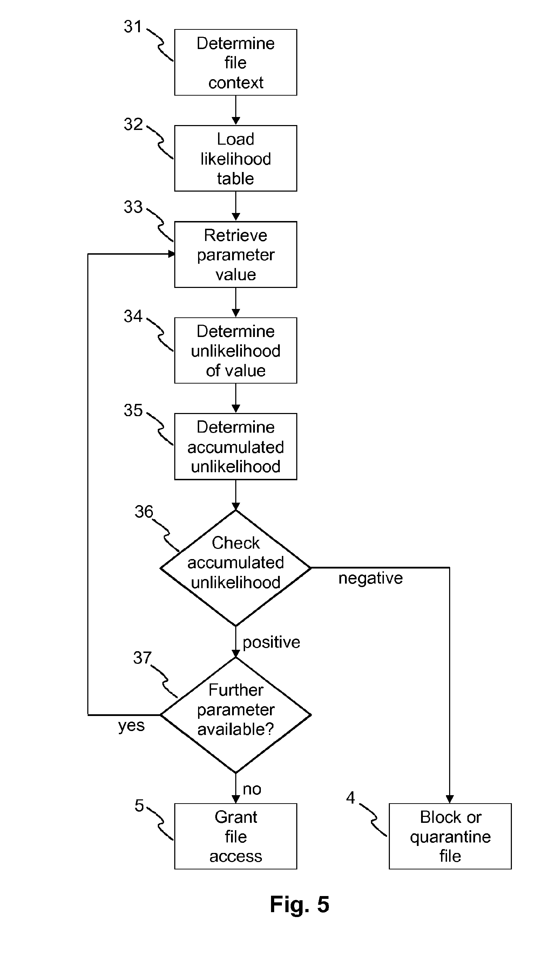

When a file has passed the second stage 2, i.e. it has been found that the file conforms to the underlying standard, a deeper analysis of the file is performed in the third stage 3. The corresponding parsing method is schematically depicted in Fig. 5.

In the second stage 2 all checking steps use well-defined bounds, which define whether a value is valid or not. In contrast, the third stage 3 uses a fuzzy likelihood that a parameter value is 'normal' or not. As in the second stage 2 and the third stage 3 at least partly the same parameters are checked, it is likewise possible to combine both stages 2, 3.

For each parameter that shall be analyzed a histogram or value distribution, a so-called likelihood table, is provided, which indicates the likelihood of the values over the complete allowed value range. The likelihood tables depend on the context in which the media file is accessed. Therefore, advantageously multiple sets of likelihood profiles are provided for the different contexts. After determining 31 the file context the appropriate profile is selected for the analysis, i.e. the corresponding likelihood tables are loaded 32. The context of the given file is often readily available, e.g. because the file is retrieved from a image or music library. If this is not the case, the context is preferably estimated. The most valuable information about the file is the original source of the file. However, also the file size or the application trying to access the file are suitable for estimating the context and determining the profile to be selected. Once the appropriate profile has been selected 25, a first parameter value is retrieved 33 from the DIP header. The less likely the parameter value is, the more unlikely it is to find this value in the DIP header. Therefore, based on the likelihood tables it is determined 34 how 'unlikely' the indicated parameter value is. The 'unlikelihood' is accumulated and compared 36 with a threshold. If the accumulated value is above the threshold, the file is blocked or quarantined 4. If the accumulated value is below the threshold, it is checked 37 whether a further parameter is available for evaluation. If so, the method returns to step 33 and the next parameter value is retrieved 33. Parsing is continued until either the value of the accumulated unlikelihood is above the threshold or the checking step 37 yields that no further parameter is available. In the latter case access to the file is granted 5. Of course, it is likewise possible to compare the unlikelihood of some or all parameter values with corresponding threshold without calculating an accumulated unlikelihood.

To give an example, for the BMP image file the file size and the image width and height are considered. Typical file sizes can easily be defined or measured. The resulting value distribution will be a smooth curve with wider peeks around the size of common resolutions. Typical resolutions (width and height) are also easy to define. For example, for images originating from the internet typical button or banner sizes are advantageously used. For a photographic image collection typical camera resolutions are preferably used. Again the resulting value distributions will be smooth curves with certain peeks, but generally not as smooth as the value distribution for the file size. In addition, extreme large values or extremely differing values for width and height can safely be considered as unlikely.

Also the number of bits per pixel and the compression method are advantageously analyzed. For these parameters the likelihood is highly correlated to the context the image occurs in and the file and image size. Large photographs show a high likelihood for RGB encoding with a high number of bits per pixel, typically 24 bits per pixel. In contrast, small images like icons or buttons tend to have a lower color depth, e.g. 8 bits per pixel, in combination with RLE encoding.

The profiles for the different contexts are advantageously provided by the provider of the malware protection solution. In this way some basic, but static profiles are readily available. However, in order to prevent false alarms, these profiles cannot be too strict. In order to obtain better matching profiles, individual profiles are favorably calculated using already available files, which are known to contain no malware.

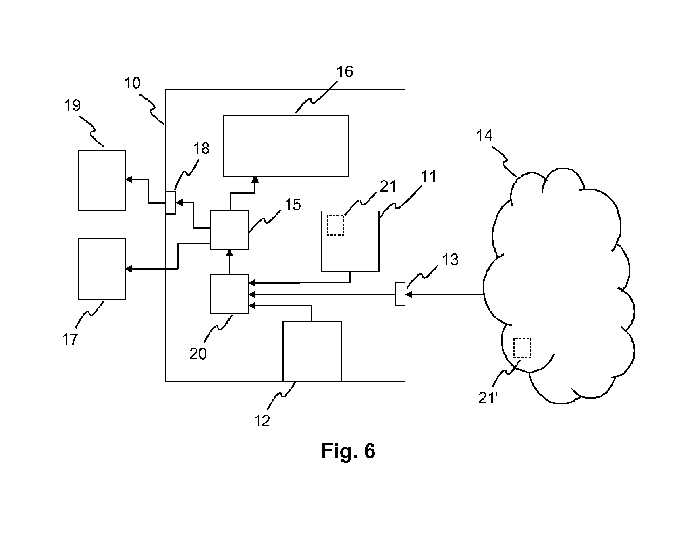

An apparatus 10 for playback of media files, which implements a malware protection scheme according to the invention, is schematically illustrated in Fig. 6. The apparatus 10 has an internal storage device 11, e.g. a hard disk. The apparatus 10 further has a drive 12 for exchangeable storage media, e.g. a disk drive, a card reader, a USB connector or the like. In order to access external media sources the apparatus 10 is connected to a network 14, e.g. a home network or the internet, with a cable-based or wireless network connector 13. A processor 15 is provided for accessing and rendering media files 21, 21', e.g. on a display 16, connected loudspeakers 17, or via an output 18 on a connected playback device 19. When the processor 15 requests access to a media file 21, 21', a malware protection engine 20 first analyzes the media file to determine whether the media file contains malware or is likely to contain malware and should be blocked or quarantined. For this purpose the malware protection engine 20 carries out the different stages of the malware protection scheme as described above.

## Claims

1. Method for detecting malware in a media file (21, 21'), **having** the steps of:
- retrieving (22) one or more parameter values from the media file (21, 21');
- comparing (23) the retrieved one or more parameter values with valid parameter values to detect invalid parameter values; and
- blocking (4) access to the media file (21, 21') if more than a specified number of invalid parameter values are detected.

2. Method according to claim 1, **further** having the steps of:
- determining a file type of the media file (21, 21') using at least two different file type determining methods; and
- blocking (4) access to the media file (21, 21') if a mismatch exists in the determined file types.

3. Method according to claim 1 or 2, **further** having the steps of:
- determining (34, 35) an unlikelihood of the retrieved one or more parameter values;
- comparing (36) the determined unlikelihood with a threshold; and
- blocking (4) access to the media file (21, 21') if the determined unlikelihood is above the threshold.

4. Method for detecting malware in a media file (21, 21'), **having** the steps of:
- retrieving (33) one or more parameter values from the media file (21, 21');
- determining (34, 35) an unlikelihood of the retrieved one or more parameter values;
- comparing (36) the determined unlikelihood with a threshold; and
- blocking (4) access to the media file (21, 21') if the determined unlikelihood is above the threshold.

5. Method according to claim 4, **further** having the steps of:
- determining a file type of the media file (21, 21') using at least two different file type determining methods; and
- blocking (4) access to the media file (21, 21') if a mismatch exists in the determined file types.

6. Method according to one of claims 3 to 5, **wherein** the unlikelihood of the retrieved one or more parameter values is determined using one or more likelihood tables, which indicate the likelihood of the parameter values for one or more of the parameters over the complete allowed value range.

7. Method according to one of claims 3 to 6, **wherein** the unlikelihood of the retrieved one or more parameter values is determined in dependence on the context in which the media file (21, 21') is accessed.

8. Method according to claim 8, **wherein** different likelihood tables are provided for different contexts.

9. Method according to one of claims 3 to 8, **wherein** an accumulated unlikelihood is determined (35) for the one or more parameter values.

10. Method according to claim 6 or 8, **further** having the step of generating the one or more likelihood tables by analyzing parameter values of media files (21, 21') that are known to contain no malware.

11. Apparatus (10) for playback of a media file (21, 21'), **characterized in that** the apparatus (10) comprises a malware protection engine (20) adapted to perform a method according to one of claims 1 to for detecting malware in the media file (21, 21').

12. Method for providing one or more likelihood tables to a malware protection engine (20), the method **having** the steps of:
- generating the one or more likelihood tables by analyzing parameter values of media files (21, 21') that are known to contain no malware; and
- making the one or more likelihood tables available to the malware protection engine (20),
